# EUROPÄISCHE PATENTANMELDUNG

(11) **EP 4 467 964 A2**
(43) Veröffentlichungstag der Anmeldung: **27.11.2024**
(21) Anmeldenummer: 24197161.3
(22) Anmeldetag: 12.01.2023
(51) Int. Cl.: G01N 21/00

(54) **VORRICHTUNG FÜR KLEINVOLUMIGES SCHÜTTGUT**

(30) Priorität: 14.01.2022 DE 102022100828
(62) Teilanmeldung aus: 23701247.1
(71) Anmelder: Kraemer, Thilo, 64291 Darmstadt (DE)
(72) Erfinder: Kraemer, Thilo, 64291 Darmstadt (DE)

(57) **Zusammenfassung**

Beschrieben wird eine Vorrichtung (1) für kleinvolumiges Schüttgut umfassend eine Anordnung zur Vereinzelung (3), sowie eine unterhalb der Anordnung zur Vereinzelung (3) angeordnete Messvorrichtung (23), wobei die Messvorrichtung (23) zumindest eine Messstation umfasst, mit der ein Schüttgut vermessen werden kann. Zwischen der Anordnung zur Vereinzelung (3) und der Messvorrichtung (23) ist eine Transportvorrichtung (19) vorgesehen, mit der das Schüttgut der zumindest einen Messstation der Messvorrichtung (23) zuführbar ist.

## Beschreibung

Die Erfindung betrifft eine Vorrichtung für kleinvolumiges Schüttgut nach den Merkmalen des Patentanspruchs 1.

Damit kleinvolumiges Schüttgut hinsichtlich Qualität und Eigenschaften, wie zum Beispiel der Härte, vermessen werden kann, muss das Schüttgut zuvor vereinzelt werden. Dies geschieht mit einer Vorrichtung zur Vereinzelung von Schüttgut. Nachdem das Schüttgut vereinzelt wurde, kann es mittels Vermessungsstationen vermessen werden. Vorrichtungen, die sowohl eine Vorrichtung zur Vereinzelung als auch Vermessungsstationen umfassen, benötigen viel Stellplatz, weil sie sehr ausladend aufgebaut sind.

DE 10 2017 114 972 A1 betrifft ein Verfahren zum Versorgen einer Nietmaschiene mit Nietelementen, insbesondere während des Betriebs der Nietmaschine, wobei mindestens eine Nietelementbereitstellungsanordnung mit mindestens einer Nietelementbereitstellungseinheit zur Bereitstellung und zur Vereinzelung der Nietelemente vorgesehen ist, wobei die Nietmaschine eine Nietelementaufnahmeanordnung mit mindestens einer Nietelementaufnahme zur Aufnahme der Nietelemente aufweist, wobei zumindest ein Teil des Transports von einer der Nietelmentbereitstellungseinheiten zu einer der Nietelementaufnahmen roboterbasiert erfolgt.

Weiterhin ist aus AT 412 398 B eine Linearfördereinrichtung für Einzelteile mit Vorrichtungen zum Ausrichten und gegebenenfalls Sortieren sowie zum lagerichtigen Führen und gegebenenfalls Speichern bekannt, deren Einlass einem Auslass einer Fördervorrichtung zum Transport einer Teilmenge von ungeordneten Einzelteilen nachgeordnet ist und deren dem Einlass gegenüberliegender Endbereich einer Entnahmevorrichtung zugeordnet ist und mit einer aus mehreren Teilen bestehenden Führungsbahn für die Einzelteile und einem dieser Führungsbahn zugeordneten Antrieb.

Ferner beschreibt US 2017/0137227 A1 eine Transportvorrichtung, die ein endloses Vakuumförderband mit mehreren Perforationen aufweist. Das Förderband transportiert Partikel entlang einer Transportrichtung, während sie zu den Perforationen angesaugt werden, wodurch eine sich bewegende Transportoberfläche definiert wird. Die Transportfläche erstreckt sich in einer im Wesentlichen vertikalen Ebene und die Transportrichtung ist relativ zur horizontalen Richtung nach oben geneigt. Eine geneigte Recyclingschale befördert vom Förderband gefallene Partikel durch Schwerkraft zurück zu einer Aufgabenzone. Eine Trennwand trennt eine Verarbeitungszone von einer Reinzone der Vorrichtung. Das Transportband wirkt mit einem länglichen Vakuumkasten zusammen, der an einer Seite offen ist, wobei die offene Seite durch einen länglichen Schieber abgedeckt ist. Der Schieber hat Saugöffnungen mit einem entlang der Transportrichtung variierenden Querschnitt.

Zudem ist aus US 2005/0062466 A1 eine Transportvorrichtung für elektronische Teile bekannt, die ein Transportmedium mit mehreren Reihen von Holräumen enthält. Die Linien sind bezüglich der Rotationsachse konzentrisch. Eine Antriebsvorrichtung treibt das Transportmedium rotierend an. Eine Zuführvorrichtung führt separat eine Vielzahl von zufällig eingeführten elektronischen Bauteilen nacheinander zu. Eine Zuführeinrichtung führt die von der Zuführeinrichtung separat zugeführten elektronischen Bauteile in die Kavitäten des Transportmediums ein. Eine Entnahmevorrichtung entnimmt die elektronischen Bauteile aus den Hohlräumen des Transportmediums.

Ferner beschreibt WO 98/19945 A2 eine Tablettenprüfvorrichtung, umfassend einen spiralförmigen Vibrationsförderer-Separator, eine Positioniereinheit mit einem Rechen und einer Orientierungsvorrichtung, die zwischen den ersten beiden oben erwähnten Einheiten angeordnet und als linearer Vibrationsförderer ausgebildet ist. Eine Sensoreinrichtung löst den Rechen aus und ermöglicht eine automatische Trennung von Tablettenbruchstücken mittels einer Bruchstückfalle.

Des Weiteren beschreibt EP 2 664 551 A1 ein Verfahren, dass das Bereitstellen einer Zuführvorrichtung zum Aufnehmen und Weitergeben kleiner pharmazeutischer Produkte umfasst, wobei die pharmazeutischen Produkte von einem Schwingförderer transportiert werden. Eine Produktmenge wird auf einem Anfangsbereich des Förderers in einem Bereich nach einem Dosierelement durch einen Eingabesensor gemessen. Die durch die Abgabevorrichtung geführten Produkte werden von einem Zählsensor gezählt, z.B. Lichtgittersensor. Der durch die Betriebsparameter des Dosierorgans und des Förderers ermittelte Wert wird automatisch durch eine Regeleinrichtung aufgrund der Sensoren eingestellt.

Schließlich ist aus US 2016/0167866 A1 eine kleine Medikamentenzuführung bekannt, die einen Behälter umfasst, der die Breite oder Höhe von Medikamenten einschränken kann, so dass die Zuführung eine breite Palette von Medikamenten mit verschiedenen unterschiedlichen Formen oder Größen handhaben und leicht angepasst werden kann. Ein Breitenbegrenzungselement, das die Breite eines Zwischenraums über einem Umfangabschnitt vergrößert oder verkleinert, ist so angeordnet, dass es einem Abgabemechanismus gegenüberliegt, der Arzneimittel mit einer höheren Geschwindigkeit als der des Umfangsabschnitts zur Außenseite eines Behälters abgibt. Ein Abstand zwischen dem Breitenbegrenzungselement und dem Abgabemechanismus wird in Übereinstimmung mit einer Breite eines in einer Messkammer gehaltenen Messobjekts geändert. Die Höhe der auf dem peripheren Abschnitt platzierten Arzneimittel wird durch ein Höhebegrenzungselement gemäß der Höhe des Messziels begrenzt.

Aufgabe der vorliegenden Erfindung ist es deshalb, eine Vorrichtung für kleinvolumiges Schüttgut bereitzustellen, die sehr kompakt aufgebaut ist und mit der Schüttgut exakt vermessen werden kann.

Diese Aufgabe wird durch eine Vorrichtung nach den Merkmalen des Patentanspruchs 1 gelöst.

Die Erfindung betrifft somit eine Vorrichtung für kleinvolumiges Schüttgut umfassend eine Anordnung zur Vereinzelung, mit der das Schüttgut vereinzelbar ist, sowie eine unterhalb der Anordnung zur Vereinzelung angeordnete Messvorrichtung. Die Messvorrichtung weist zumindest eine Messstation auf, mit der ein Schüttgut vermessen werden kann. Bei dem kleinvolumigen Schüttgut handelt es sich beispielsweise um ein medizinisches Produkt, wie zum Beispiel eine Tablette. Der Begriff Schüttgut wird im Folgenden für ein einzelnes Produkt und an manchen Passagen auch als Sammelbegriff für mehrere dieser Produkte (Schüttgüter) verwendet.

Zwischen der Anordnung zur Vereinzelung und der Messvorrichtung ist eine Transportvorrichtung vorgesehen, mit der das Schüttgut zu der zumindest eine Messstation der Messvorrichtung transportiert werden kann.

Vorteilhaft bei dieser Vorrichtung ist, dass diese sehr kompakt aufgebaut ist und dass ein Schüttgut durch mehrere Messtationen transportiert wird, in denen es vermessen wird.

Vorteilhaft ist zudem, dass die Anordnung zur Vereinzelung einen Vorratsbehälter sowie ein als Vibrationsplatte ausgebildetes Plattenelement umfasst, wobei der Vorratsbehälter oberhalb der Vibrationsplatte angeordnet ist. Dadurch wird gewährleistet, dass das Schüttgut ausschließlich durch Gravitation auf die Vibrationsplatte gelangt und kein zusätzlicher Antrieb erforderlich ist, mit dem das Schüttgut auf die Vibrationsplatte transportiert werden muss. Da auf einen zusätzlichen Antrieb verzichtet werden kann, trägt diese Bauweise dazu bei, dass die Vorrichtung kompakt aufgebaut ist. Vorteilhaft ist zudem, dass die Vibrationsplatte sehr einfach zu reinigen ist.

Die Vorrichtung umfasst einen Vibrationsantrieb, der unterhalb der Vibrationsplatte angeordnet ist und mit dem die Vibrationsplatte in Vibration versetzt werden kann, um das aus dem Vorratsbehälter kommende Schüttgut zu vereinzeln und zur Transportvorrichtung zu transportieren. Der Umstand, dass der Vibrationsantrieb direkt unterhalb der Vibrationsplatte angeordnet ist, trägt dazu bei, dass die Vorrichtung kompakt aufgebaut ist.

Besonders vorteilhaft ist, dass der Vibrationsantrieb sowie die Transportvorrichtung auf einer Ebene angeordnet sind, weil dadurch viel Platz gespart werden kann. Auch dies trägt zu dem kompakten Aufbau der Vorrichtung bei.

Bevorzugt handelt es sich bei der Transportvorrichtung um einen Transportstern oder einen Transportrechen, weil dann der Vibrationsantrieb von der Transportvorrichtung seitlich umgeben ist. Die Transportvorrichtung dreht sich somit um den Vibrationsantrieb. Diese Bauweise ist platzsparend und trägt zusätzlich zur Kompaktheit der Vorrichtung bei.

Vorteilhaft ist auch, dass der Vorratsbehälter an einer Zuführungsöffnung, über die Schüttgut in den Vorratsbehälter eingebracht werden kann, einen Normanschluss besitzt, an dem Schüttgutzuführungen verschiedenen Typs schnell und einfach angebracht und wieder entfernt werden können. Diese Zuführungsöffnung sowie der Normanschluss können in einem oberen Abschnitt des Vorratsbehälters oder auch an einer Seite des Vorratsbehälter vorgesehen sein. Ein Umbau und damit eine Anpassung der Anordnung zur Vereinzelung an Schüttgutzuführung unterschiedlichen Typs ist daher nicht erforderlich. Dadurch kann die Vorrichtung an verschiedenen Standorten eingesetzt werden, also auch an Standorten, an denen Platz für einen Umbau bzw. Anpassung der Anordnung zur Vereinzelung nicht vorhanden ist oder aber Werkzeug zum Umbau bzw. Anpassung nicht verfügbar ist.

Es wird hiermit auch explizit vorgeschlagen, mehrere Merkmale der einzelnen beschriebenen Ausführungsformen untereinander zu kombinieren.

Die Vorrichtung wird im Folgenden anhand von Figuren näher erläutert. Es zeigen:
- Figur 1: eine Seitenansicht einer Vorrichtung für kleinvolumiges Schüttgut;
- Figur 2: eine Draufsicht auf die in Figur 1 gezeigte Vorrichtung nach Schnitt durch eine Ebene S;
- Figur 3: einen Längsschnitt entlang A-A durch die in Figur 2 gezeigte Vorrichtung und
- Figur 4: eine Draufsicht auf die Vorrichtung nach Schnitt durch die Ebene B-B bei der in Figur 1 gezeigten Vorrichtung.

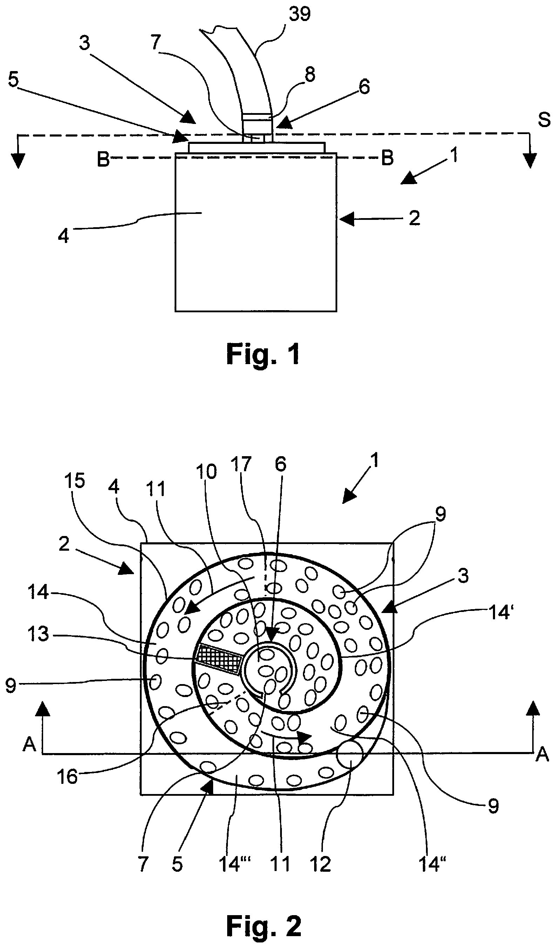

Figur 1 zeigt eine Seitenansicht einer Vorrichtung 1 für kleinvolumiges Schüttgut. Bei dem kleinvolumigen Schüttgut handelt es sich beispielsweise um ein medizinisches Produkt, das in Form einer Tablette, eines Oblongs oder eines Korns vorliegen kann. Die Vorrichtung 1 dient sowohl zum Vereinzeln als auch zum Vermessen von Schüttgut. Diese Vorrichtung 1 umfasst einen unteren Abschnitt 2 sowie einen oberen Abschnitt 3. Der untere Abschnitt 2 ist von einem Gehäuse 4 umgeben. In dem oberen Abschnitt 3 befindet sich eine Anordnung zur Vereinzelung 3, womit der obere Abschnitt der Anordung zur Vereinzelung entspricht. Diese Anordnung zur Vereinzelung 3 umfasst ein als Vibrationsplatte ausgebildetes Plattenelement 5 sowie einen einfach abzunehmenden Vorratsbehälter 6, in dem Schüttgut bevorratet werden kann. Der Vorratsbehälter 6 kann mit dem Plattenelement 5 entweder fest verbunden sein, oder von diesem Plattenelement 5 entkoppelt sein. Ist der Vorratsbehälter 6 von dem Plattenelement 5 entkoppelt, so kann der Vorratsbehälter 6 beispielsweise mit dem Gehäuse 4 verbunden sein.

Der Vorratsbehälter 6 umfasst in einem unteren Bereich eine kleine, untere, Öffnung 7, über die das Schüttgut auf das Plattenelement 5 gelangen kann. Schüttgut ist in der Figur 1 nicht dargestellt. Über eine obere Zuführungsöffnung (in dieser Ansicht nicht zu sehen), die sich in einem oberen Bereich des Vorratsbehälters 6 befindet, kann Schüttgut in den Vorratsbehälter 6 eingebracht werden. Dazu können Schüttgutzuführungen an den oberen Bereich des Vorratsbehälter 6 angebracht werden.

Damit Schüttgutzuführungen verschiedenen Typs schnell und einfach am Vorratsbehälter 6 angebracht werden können, besitzt der Vorratsbehälter 6 im oberen Bereich einen Normanschluss 8. Dieser Normanschluss kann beispielsweise eine Schelle sein, mit der die entsprechende Schüttgutzuführung an dem Vorratsbehälter 6 befestigt werden kann.

Ein Umbau und damit eine Anpassung der Anordnung zur Vereinzelung an unterschiedliche Schüttgutzuführungen ist daher nicht erforderlich. Dadurch kann die Vorrichtung an verschiedenen Standorten eingesetzt werden, also auch an Standorten, an denen Platz für einen Umbau bzw. Anpassung der Anordnung zur Vereinzelung nicht vorhanden ist oder aber Werkzeug zum Umbau bzw. Anpassung nicht verfügbar ist.

Bei der in Figur 1 dargestellten Schüttgutzuführung 39 handelt es sich um einen Schlauch 39, über den Schüttgut in den Vorratsbehälter 6 eingebracht werden kann. Da der Vorratsbehälter 6 einen Normanschluss 8 besitzt, kann auch eine andere Schüttgutzuführung, zum Beispiel ein Trichter, einfach und schnell an dem Vorratsbehälter 6 angebracht werden.

Da der Vorratsbehälter 6 einfach abzunehmen ist, kann der Vorratsbehälter 6 auch separat befüllt werden und anschließend wieder auf die Vorrichtung 1 gesetzt werden.

In Figur 2 ist eine Draufsicht auf die in Figur 1 gezeigte Vorrichtung 1 nach Schnitt durch eine Ebene S dargestellt.

Auf dem unteren Abschnitt 2 der Vorrichtung 1 ist das Plattenelement 5 des oberen Abschnitts 3 angeordnet. Durch den Schnitt ist auch die untere Öffnung 7 des Vorratsbehälters 6 zu sehen, über die das Schüttgut auf das Plattenelement 5 gelangen kann. Das Schüttgut, das in Figur 2 in Form von Oblongs vorliegt, ist der Übersicht halber nur teilweise mit dem Bezugszeichen 9 versehen. Dieses Schüttgut 9 wird über eine Zuführungsöffnung 10 eingebracht, die im oberen Bereich des Vorratsbehälters 6 angebracht ist. Möglich ist aber auch, die Zuführungsöffnung 10 beispielsweise an der, der Öffnung 7 gegenüberliegenden Seite, und nicht im oberen Bereich der Vorratsbehälters 6 vorzusehen.

Durch einen Vibrationsantrieb, beispielsweise einen Wurfförderer, wird das Schüttgut 9 entlang einer Bahn 14 in Richtung des Pfeils 11 bewegt, bis es schließlich eine Öffnung 12 erreicht und nach unten fällt. Dort fällt das vereinzelte Schüttgut in eine Kammer einer Transportvorrichtung, zum Beispiel in eine Kammer eines Transportsterns. Die Transportvorrichtung mit den Kammern befindet sich im unteren Abschnitt 2 und ist deshalb in Figur 2 nicht zu sehen. Bei dem Transport des Schüttguts in Richtung des Pfeils 11, d.h. in Richtung der Öffnung 12, wird das Schüttgut 9 durch den Vibrationsantrieb zudem vereinzelt. Weil sich der Vibrationsantrieb im unteren Abschnitt 2 befindet, ist dieser in Figur 2 ebenfalls nicht zu sehen.

Bei dem Transport des Schüttguts 9 in Richtung der Öffnung 12 wird das Schüttgut über ein Sieb 13 geführt. Durch dieses Sieb 13 fällt Staub oder kleinere Bruchstücke des Schüttguts 9 nach unten in einen unter dem Sieb 13 angeordneten Behälter (nicht zu sehen) und wird so von dem Plattenelement 5 entfernt. So wird verhindert, dass Staub oder kleinere Bruchstücke in die Öffnung 12 gelangen und so Ergebnisse der Messungen des zu vermessenden Schüttguts verfälschen.

Die Bahn 14, auf der das Schüttgut 9 transportiert wird, ist vorzugsweise in mehrere Bahnabschnitte unterteilt, wodurch die Strecke der Bahn 14 ausreichend lang ist, damit das Schüttgut 9 auf dem Weg zur Öffnung 12 vereinzelt werden kann. Die Bahn 14 des Plattenelements 5 ist spiralförmig aufgebaut und weist drei Bahnabschnitte auf, nämlich einen inneren Bahnabschnitt 14', einen mittleren Bahnabschnitt 14" sowie einen, sich daran anschließenden, äußeren Bahnabschnitt 14"' auf. Die Grenzen der einzelnen Bahnabschnitte 14', 14", 14‴ sind durch gestrichelte Linien 16, 17 gekennzeichnet. Außen wird die Bahn 14 von einer Außenwand 15 umgeben, die verhindert, dass das Schüttgut 9 von dem Plattenelement 5 fällt. Es versteht sich, dass die Bahn 14 nicht spiralförmig aufgebaut sein muss, sondern auch einen anderen Aufbau besitzen kann.

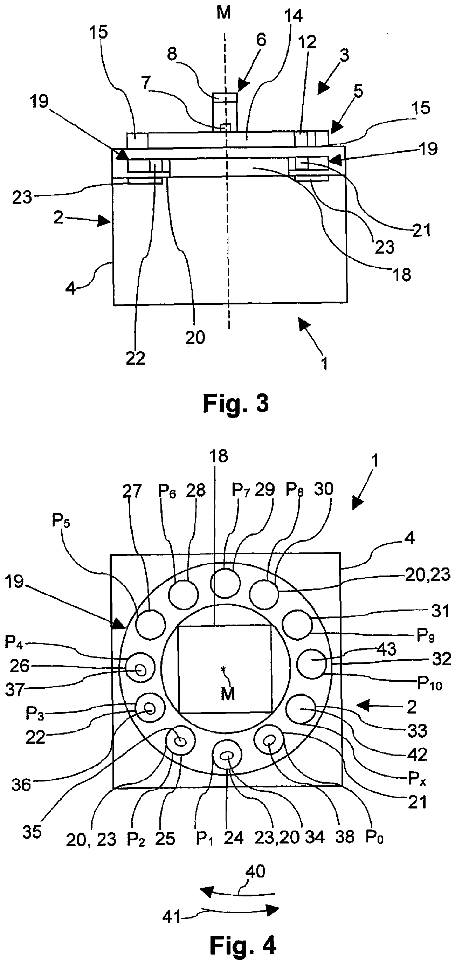

Figur 3 zeigt einen Längsschnitt entlang A-A durch die in Figur 2 gezeigte Vorrichtung 1, wobei der obere Abschnitt 3 wiederum oberhalb des unteren Abschnitts 2 angeordnet ist. Der obere Abschnitt 3 ist die Anordnung zur Vereinzelung 3 und besteht aus dem Plattenelement 5 sowie dem Vorratsbehälters 6, der entweder mit dem Plattenelement 5 verbunden oder von diesem entkoppelt angeordnet sein kann. Neben der unteren Öffnung 7 zum Ausbringen des Schüttguts auf das Plattenelement 5 ist noch der Normanschluss 8 zu erkennen. Eine Schüttgutzuführung ist in Figur 3 nicht dargestellt. Auch wurde darauf verzichtet, in Figur 3 Schüttgut darzustellen, das auf der Bahn 14 des Plattenelements 5 in Richtung der Öffnung 12 transportiert wird.

Vorzugsweise kann die Größe der unteren Öffnung 7 des Vorratsbehälters 6 verstellt werden, wodurch die ausgebrachte Menge an Schüttgut pro Zeiteinheit verändert oder der Größe des Schüttguts angepasst werden kann.

Im unteren Abschnitt 2 befindet sich direkt unterhalb des Plattenelements 5 der nur schematisch dargestellte Vibrationsantrieb 18, mit dem das Schüttgut nicht nur in Richtung der Öffnung 12 transportiert wird, sondern auch auf dem Weg dahin vereinzelt wird. Bei dem Vibrationsantrieb 18 kann es sich um einen Wurfförderer handeln, der durch Vibration das Schüttgut transportiert und voneinander separiert. Vibrationsantriebe für den Transport von Schüttgut mittels Vibration sind bekannt, weshalb auf eine detaillierte Beschreibung des Vibrationsantrieb 18 an dieser Stelle verzichtet wird.

Der Vibrationsantrieb 18 wird seitlich von der Transportvorrichtung 19 umgeben, wobei die Transportvorrichtung 19 vorzugsweise radförmig ausgebildet ist und insbesondere als Transportstern (wie in Figur 3 dargestellt) oder auch als Transportrechen ausgestaltet ist.

Die als Transportstern 19 ausgebildete Transportvorrichtung 19 ist oberhalb eines Bodens 20 angeordnet und umfasst mehrere Kammern, in denen ein vorher vereinzeltes Schüttgut transportiert wird. In der Figur 3 sind nur zwei Kammern 21, 22 zu sehen.

Unterhalb des Bodens 20 ist eine Messvorrichtung 23 vorgesehen, die zumindest eine Messstation umfasst, wobei die Messvorrichtung 23 nur ausschnittsweise und schematisch dargestellt ist. Vorzugsweise umfasst die Messvorrichtung 23 jedoch mehrere Messstationen, damit möglichst viele Parameter des Schüttguts vermessen werden können.

Wie in Figur 3 zu sehen, befindet sich die Kammer 21 der Transportvorrichtung 19 direkt unterhalb der Öffnung 12 des Plattenelements 5. Dadurch kann ein Schüttgut, das durch die Öffnung 12 fällt, direkt in die Kammer 21 der Transportvorrichtung 19 gelangen. Die Öffnung 12 ist mit einem Detektor ausgestattet, zum Beispiel einem Schalldetektor, mit dem detektiert werden kann, ob nur ein Schüttgut oder mehrere Schüttgüter in die Kammer gelangt sind.

Nachdem das Schüttgut in die Kammer 21 der Transportvorrichtung 19 gefallen ist, und der Detektor festgestellt hat, dass tatsächlich nur ein Schüttgut in die Kammer 21 gelangt ist, wird das Schüttgut in eine erste Richtung um den Vibrationsantrieb 18 herum und oberhalb der Messvorrichtung 23 geführt. Dabei passiert das in der Kammer 21 liegende Schüttgut die zumindest erste Messstation der Messvorrichtung 23. Bei dieser ersten Messstation handelt es sich vorzugsweise um eine Waage.

Mit der Waage wird detektiert, ob tatsächlich nur ein Schüttgut in die Kammer 21 gelangt ist. Wird über die Waage festgestellt, dass mehrere Schüttgüter oder gar nur wenige Bruchstücke eines Schüttguts in die Kammer 21 gelangt sind, wird die Kammer 21 entleert. Dazu wird die Transportvorrichtung 19 zurück in eine zweite Richtung, d.h. in die der ersten Richtung entgegengesetzten Richtung, bewegt. Dabei wird die Kammer 21 zu einem Abfallbehälters (nicht zu sehen) bewegt, der im Boden 20 eingebracht ist. Sobald sich die Kammer 21 oberhalb des Abfallbehälters befindet, fallen Bruchstücke bzw. die mehreren Schüttgüter in diesen Abfallbehälter und werden so entsorgt.

Durch den Detektor sowie durch die Waage wird gewährleistet, dass immer nur ein Schüttgut durch die Messvorrichtung vermessen wird.

Vorzugsweise umfasst die Messvorrichtung 23 neben der Waage noch weitere Messstationen, wodurch die unterschiedlichsten Parameter ermittelt werden können. So können diese weiteren Messstationen Videokameras und/oder NIR-Sensoren und/oder gar eine Bruchkammer sein. In dieser Bruchkammer können neben der Härte auch die Breite und die Länge eines Schüttguts vermessen werden. Mit den NIR-Sensoren, wobei beispielsweise vier oder acht solche Sensoren vorgesehen sein können, wird die chemische Zusammensetzung bzw. die Qualität des Schüttguts ermittelt. Videokameras dienen dazu zu überprüfen, ob tatsächlich nur ein Schüttgut über die Öffnung 12 in die Transportvorrichtung 19 gelangt ist, oder auch dazu zu prüfen, ob das Schüttgut die gewünschte Form hat.

In Figur 3 ist eine durch die Vorrichtung 1 verlaufende Mittelachse M gezeigt, die durch das Zentrum der Vorrichtung 1 verläuft. Auf dieser Mittelachse M sind der Vorratsbehälter 6 sowie der Vibrationsantrieb 18 angeordnet. Die Mittelachse M verläuft damit auch mittig durch den Vibrationsantrieb 18 sowie den Vorratsbehälter 6. Deshalb dreht sich die Transportvorrichtung 19 nicht nur um den Vibrationsantrieb 18, sondern auch um die Mittelachse M.

Figur 4 zeigt eine Draufsicht auf den unteren Abschnitt 2 der Vorrichtung 1 nach einem Horizontalschnitt entlang einer Ebene B-B (siehe Figur 1). Die Transportvorrichtung 19 umgibt den Vibrationsantrieb 18 von allen Seiten und kann um diesen Vibrationsantrieb 18 in Richtung des Pfeils 40 vorbewegt bzw. in Richtung des Pfeils 41 zurückbewegt werden.

Die Transportvorrichtung 19 ist in Figur 4 als Transportstern ausgebildet und weist mehrere Kammern 21, 22, 24 bis 33 auf, die Schüttgut aufnehmen können. Jeweils ein als Oblong ausgebildetes Schüttgut 34 bis 38 befindet sich bereits in den Kammern 21, 22, 24, 25, 26. Die anderen Kammern 27 bis 33 sind leer.

In die Kammer 21 wurde das Schüttgut 38 über die Öffnung 12 des Plattenelements 5 von oben bereits eingebracht (siehe auch Figur 3). Diese Kammer 21 und das darin befindliche Schüttgut 38 befindet sich in einer Position P0 (Ausgangsposition). Da der an der Öffnung 12 angebrachte Detektor (nicht zu sehen) festgestellt hat, dass es sich nur um ein Schüttgut handelt, wird die Kammer 21 mit dem darin befindlichen Schüttgut 38 weiter vor in Richtung des Pfeils 40 und damit in Richtung der Position P10 bewegt. Dabei gelangt das Schüttgut 38 zuerst zu der Position P1. In dieser Position P1 befindet sich im Boden 20 eine erste Messstation der Messvorrichtung 23 in Form einer Waage. Mit der Waage wird ermittelt, ob es sich tatsächlich nur um ein Schüttgut handelt, das sich in der Kammer 21 befindet. Würden sich in der Kammer 21 nur ein paar Bruchstücke oder gar zwei Schüttgüter befinden, so würde die Transportvorrichtung 19 in Richtung des Pfeils 41 zurückfahren, bis die Kammer 21 die Position Px erreicht hat. Dort befindet sich im Boden 20 eine Öffnung 42, unter der ein Abfallbehälter (nicht zu sehen) angeordnet ist, so dass das in der Kammer 21 befindliche Schüttgut oder Bruchstücke in den Abfallbehälter fallen und somit entsorgt werden. Sodann wird die Vorrichtung 19 wieder vor in Richtung des Pfeils 40 gefahren, bis die Kammer 21 wieder die Ausgangsposition P0 erreicht hat. In dieser Ausgangsposition P0 wird die Kammer 21 erneut mit einem Schüttgut bestückt.

Durch Entsorgung von Bruchstücken wird verhindert, dass Bruchstücke weiter vorwärts in Richtung der Position P10 transportiert werden und so auf den folgenden Messstationen liegen bleiben und diesen Stationen damit verdrecken.

Es versteht sich damit, dass es somit auch möglich ist, dass die Transportvorrichtung 19 weiter vorwärts in Richtung der Position P10 bewegt wird und dass auf eine Entsorgung von Bruchstücken auch verzichtet werden kann.

Da sich in der Kammer 21 jedoch nur ein Schüttgut 38 befindet, wird die Transportvorrichtung 19 weiter vor in Richtung des Pfeils 40 bewegt. Dabei passiert das Schüttgut 33 nacheinander die Positionen P2 bis P10. Dabei kann im Boden 20 bei jeder der Positionen P2 bis P9 eine weitere Messstation der Messvorrichtung 23 angeordnet sein. So ist es beispielsweise möglich, in dem Boden 20 als Messstationen jeweils einen NIR-Sensor vorzusehen. Jeder NIR-Sensor bildet somit eine Messstation und ist - wie auch die Waage bei der Position P1 - Teil der Messvorrichtung 23. Beim Passieren dieser Positionen P2 bis P9 wird das Schüttgut 38 somit mittels NIR vermessen. Die Messvorrichtung 23 umfasst damit acht NIR-Sensoren. Denkbar ist natürlich auch, dass nur bei den Positionen P2 bis P5 im Boden 20 NIR-Sensoren als Messstationen vorgesehen sind und dass in den Positionen P6 bis P9 das Schüttgut mittels Videokameras vermessen wird. Dazu sind die Videokameras ebenfalls im Boden 20 angeordnet, wobei jede Videokamera eine Messstation bildet. In diesem Fall würde die Messvorrichtung 23 also ebenfalls neun Messstationen aufweisen, nämlich eine Waage, vier Videokameras sowie vier NIR-Sensoren.

Nachdem die Kammer 21 mit dem Schüttgut 38 die Position P9 passiert hat, wird die Transportvorrichtung 19 weiter in Richtung des Pfeils 40 bewegt, bis die Kammer 21 mit dem darin befindlichen Schüttgut 38 die Position P10 erreicht hat. In der Position P10 weist der Boden 20 vorzugsweise eine Öffnung 43 auf, durch die das Schüttgut 38 entfernt werden kann, zum Beispiel weil unterhalb der Öffnung 43 der Abfallbehälter angeordnet ist.

Es ist jedoch auch denkbar, dass das Schüttgut 38 über die Öffnung 43 einer weiteren Messstation, wie zum Beispiel einer Bruchkammer (nicht zu sehen) zugeführt wird, die sich zwar ebenfalls im unteren Abschnitt 2 der Vorrichtung 1 befindet, jedoch unterhalb des Vibrationsantriebs 18 sowie der Transportvorrichtung 19 angeordnet ist. In dieser Bruchkammer kann neben einer Härtemessung auch eine Breiten- sowie eine Längenmessung des Schüttguts durchgeführt werden.

Es versteht sich, dass die Transportvorrichtung 19 auch mehr oder weniger als nur 12 Kammern aufweisen kann, womit die Transportvorrichtung auch mehr oder weniger Positionen anfahren kann. Bei jeder der von der Transportvorrichtung angefahrenen Position kann dabei jeweils eine Messstation einer Messvorrichtung vorgesehen sein, so dass das Schüttgut in jeder der Positionen vermessen werden kann.

### Bezugszeichenliste

- 1: Seitenansicht einer Vorrichtung
- 2: Unterer Abschnitt
- 3: Vereinzelung
- 4: Gehäuse
- 5: Plattenelement
- 6: Vorratsbehälter
- 7: Öffnung
- 8: Normanschluss
- 9: Schüttgut
- 10: Zuführungsöffnung
- 11: Pfeil
- 12: Öffnung
- 13: Sieb
- 14: Bahn
- 15: Außenwand
- 16, 17: Gestrichelte Linien
- 18: Vibrationsantrieb
- 19: Transportvorrichtung
- 20: Boden
- 21,22: Kammern
- 23: Messvorrichtung
- 24 bis 33: Kammern
- 34 bis 38: Schüttgut
- 39: Schüttgutzuführung
- 40, 41: Pfeil
- 42: ---
- 43: Öffnung
- M: Mittelachse

## Patentansprüche

1. Vorrichtung (1) für kleinvolumiges Schüttgut umfassend
- eine Anordnung zur Vereinzelung (3), mit der das Schüttgut vereinzelbar ist,
- eine unterhalb der Anordnung zur Vereinzelung (3) angeordnete Messvorrichtung (23), wobei die Messvorrichtung (23) mehrere Messstationen umfasst, mit der ein Schüttgut vermessen werden kann, wobei die Messstationen in einem Boden (20) der Vorrichtung (1) angeordnet sind, wobei eine erste der mehreren Messstationen eine Waage ist und wobei zumindest eine der weiteren Messstationen ein NIR-Sensor oder eine Videokamera ist und wobei
- zwischen der Anordnung zur Vereinzelung (3) und der Messvorrichtung (23) eine Transportvorrichtung (19) angeordnet ist, mit der das Schüttgut den Messstationen der Messvorrichtung (23) zuführbar ist.

2. Vorrichtung nach Patentanspruch 1, **dadurch gekennzeichnet, dass** die Anordnung zur Vereinzelung (3) einen Vorratsbehälter (6) sowie eine Vibrationsplatte (5) umfasst, wobei der Vorratsbehälter (6) oberhalb der Vibrationsplatte (5) angeordnet ist.

3. Vorrichtung nach Patentanspruch 2, **dadurch gekennzeichnet, dass** ein Vibrationsantrieb (18) vorgesehen ist, der unterhalb der Vibrationsplatte (5) angeordnet ist und mit dem die Vibrationsplatte (5) in Vibration versetzt werden kann, um das aus dem Vorratsbehälter (6) kommende Schüttgut zu vereinzeln.

4. Vorrichtung nach Patentanspruch 3, **dadurch gekennzeichnet, dass** der Vibrationsantrieb (18) sowie die Transportvorrichtung (19) auf einer Ebene angeordnet sind.

5. Vorrichtung nach Patentanspruch 4, **dadurch gekennzeichnet, dass** der Vibrationsantrieb (18) von der Transportvorrichtung (19) seitlich umgeben ist.

6. Vorrichtung nach Patentanspruch 2, **dadurch gekennzeichnet, dass** der Vorratsbehälter (6) einen Normanschluss (8) besitzt, an dem Schüttgutzuführungen (9) verschiedenen Typs anbringbar sind.
